Europäisches Patentamt

European Patent Office

Office européen des brevets

(19)

(11) Numéro de publication: **0 018 929**

**B1**

(12) **FASCICULE DE BREVET EUROPEEN**

(45) Date de publication du fascicule du brevet: **23.06.82**

(21) Numéro de dépôt: **80420047.5**

(22) Date de dépôt: **25.04.80**

(51) Int. Cl.³: **B 62 K 23/06,** B 62 L 3/02, B 62 K 11/14

(54) Poignée pour commande à câble de cycle ou motocycle.

(30) Priorité: **26.04.79 FR 7911213**

(43) Date de publication de la demande: **12.11.80 Bulletin 80/23**

(45) Mention de la délivrance du brevet: **23.06.82 Bulletin 82/25**

(84) Etats contractants désignés: **AT BE CH DE GB IT LI LU NL SE**

(56) Documents cités: **FR - A - 1 077 461** **GB - A - 1 074 323**

(73) Titulaire: **ANGENIEUX-CLB S.A. Société anonyme dite:** **11 rue de l'Egalerie** **F-42030 Saint-Etienne Cédex (Loire) (FR)**

(72) Inventeur: **Lauzier, René** **Ruy (Isère) (FR)**

(74) Mandataire: **Perrier, Jean-Pierre et al,** **Cabinet GERMAIN & MAUREAU 12 rue de la République** **F-42000 St-Etienne (FR)**

Courier Press, Leamington Spa, England.

Poignée pour commande à câble de cycle ou motocycle

L'invention concerne une poignée pour commande à câble comportant un levier dont l'extrémité, en forme de patte, est introduite dans la chape d'un support par rapport auquel elle est articulée, ce support étant muni de moyens de fixation sur une partie du cycle.

Dans ce type de poignée, le levier, normalement maintenu en butée contre le support par la tension du câble, est pivoté par l'utilisateur pour commander le déplacement de ce câble.

Généralement, les deux ailes de la chape du support comportent des perçages coaxiaux pour un axe d'articulation traversant également un perçage de la patte du levier.

Ce montage est onéreux et complexe à mettre en oeuvre en raison du nombre important de pièces qu'il faut assembler, telles au'axes et rondelles, et de la nécessité de prévoir une précision dans la fabrication de celles-ci. Le temps d'assemblage et la qualité de fabrication interviennent de manière sensible sur le prix de revient de la poignée.

On connait également par le brevet français 1.077.461 une poignée dont la patte du levier est traversée par une cheville dont les parties, saillant de chaque côté de la patte, sont engagées dans des oeilletons ou logements cylindriques de deux demi-coquilles de corps de poignée. Dans cette construction, le fait de rapporter le cheville dans la patte et d'utiliser des logements borgnes, nécessite de réaliser le corps de poignée en deux parties et de mettre en place le levier au moment de l'assemblage des deux parties. L'avantage minime, apporté par la solidarisation avant montage de la cheville et du levier, est annulé par la complexité du montage de l'ensemble et par le nombre important de pièces entrant dans la réalisation de la poignée, notamment pour assurer le positionnement et la liaison de ses éléments principaux.

La présente invention a pour but de fournir une poignée qui, remédiant aux inconvénients précités, soit composée d'un nombre réduit d'éléments, conduise à un montage simple et soit peu onéreuse.

Dans cette poignée, du type comportant un levier dont l'extrémité en forme de patte est munie d'un axe d'articulation formant saillie de chaque côté de la patte, et un support présentant une fente, formant chape pour le passage de la patte du levier, et des logements de réception des extrémités de l'axe d'articulation ménagés dans les parois de la chape, l'axe d'articulation est constitué par deux doigts cylindriques coaxiaux faisant partie intégrante de la patte du levier, tandis que les logements de réception des extrémités de l'axe d'articulation débouchent dans la face du support destinée à venir en appui sur une partie du cycle qui constitue le moyen de retenue de l'axe d'articulation.

Grâce à cet agencement, à l'exception des organes de fixation sur le cycle, la poignée n'est composée que de deux éléments. De plus, en raison de leur structure, ceuxci peuvent être aisément obtenus par moulage sans usinage ultérieur, ce qui réduit considérablement leur coût. En outre, le montage des éléments de la poignée est instantané, puisqu'il suffit d'engager les deux doigts de la patte du levier dans les logements de réception du support. Enfin, le recours à la partie de cycle recevant la poignée pour maintenir l'axe d'articulation et le caler en translation dans ses logements, supprime tous éléments accessoires pour assurer cette fonction. Il faut noter que cette fonction n'est utile qu'en cas de rupture de câble, car normalement, la tension du câble suffit à maintenir les doigts en appui contre le fond de leur logement.

Dans une forme de réalisation et de manière à éviter toute désolidarisation du levier et du support dans l'intervalle séparant le montage de la poignée et sa pose sur un cycle, au moins deux bords opposés délimitant l'ouverture du logement sont déformés vers l'intérieur après montage du levier.

L'invention sera mieux comprise à l'aide de la description qui suit, en référence au dessin schématique annexé représentant, à titre d'exemple non limitatif, une forme d'exécution de cette poignée:

Figure 1 est une vue de côte en élévation lorsque la poignée est fixée sur le guidon d'un cycle,

Figure 2 en est une vue en coupe suivant 2—2 de figure 1,

Figure 3 est une vue du support seul, en coupe suivant 3—3 de figure 1,

Figure 4 est une vue en coupe suivant 4—4 de figure 1,

Figures 5 et 6 sont des vues en perspective, respectivement du levier et de la poignée,

Figure 7 est une vue de côté en coupe longitudinale du support le montrant lors de son assemblage avec le levier.

La poignée, représentée au dessin, est montée sur un tube 2 appartenant, par exemple, au guidon d'une bicyclette. Cette poignée est composée d'un levier 3 et d'un support 4. Le levier 3 est constitué par une pièce métallique venant de fonderie, tandis que le support 4 est réalisé en matière synthétique moulée.

Le support présente une face profilée d'appui 5 sur le tube 2 du guidon dans laquelle débouche en évidement 11 recevant les extrémités d'un collier 6 de serrage sur le tube 2.

Le support 4 comporte également des moyens de guidage 7 d'un câble 10 entouré par une gaine 12. Ce câble 10 peut commander divers organes tels qu'un frein, ou un embrayage s'il s'agit d'un vélomoteur ou d'une motocyclette.

Le support *4* présente un logement *13* débouchant dans sa face *5*. Il comporte aussi une fente *14* qui, transversable au logement *13*, est destinée à laisser passer le levier 3.

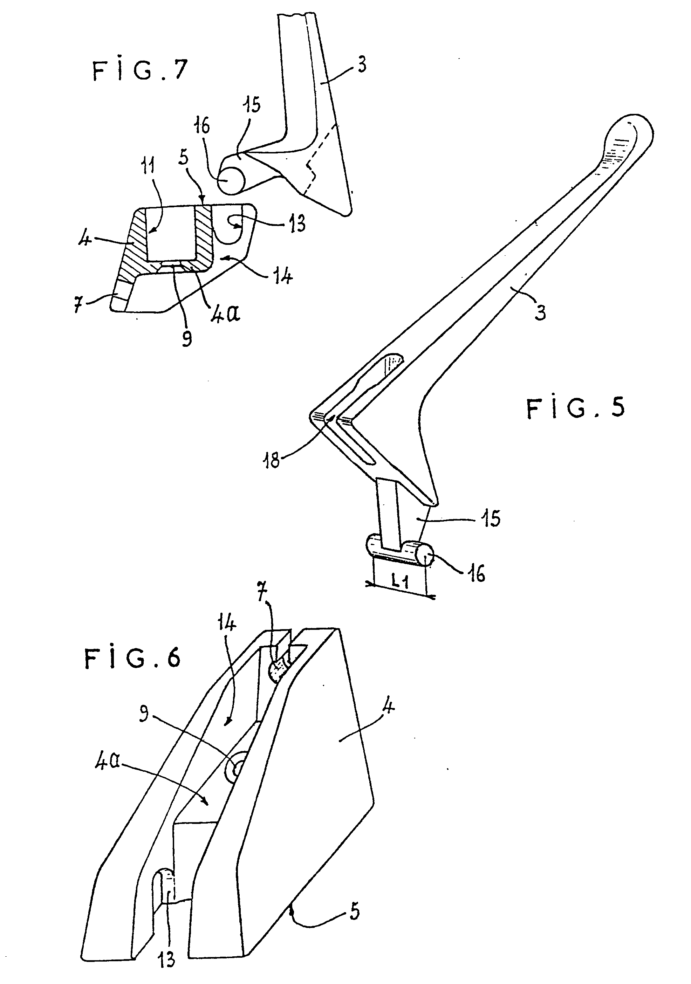

Le levier *3* présente une patte *15* de laquelle font saillie deux doigts *16* cylindriques coaxiaux. La longueur *L* du logement *13* du support correspond à la longueur cumulée *L1* (figure 5) des deux doigts *16* et de l'épaisseur de la patte *15*. Le diamètre des deux doigts *16* est égal à la largeur de logement *13*.

Il est à noter que le fond du logement *13* est en forme de surface cylindrique de rayon correspondant à celui des doigts *16*.

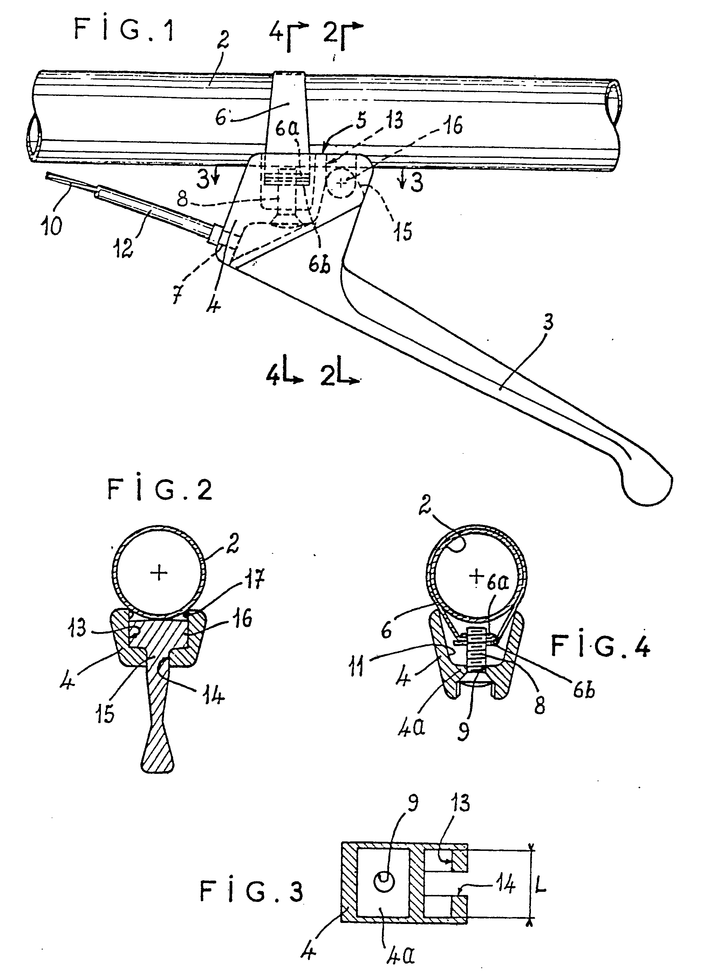

Comme montré à la figure 2, après engagement des doigts *16* dans le logement *13*, les bords de l'ouverture délimitant le logement sont déformés vers l'intérieur, de manière à ce que de petites parties en saillie *17* évitent le dégagement des doigts *16* hors du logement *13* durant les manipulations de la poignée avant sa mise en place sur un tube.

Les deux pièces, *3* et *4*, obtenues indépendamment l'une de l'autre, sont réalisées en des matériaux évitant tout risque de grippage, tels que respectivement alliage d'aluminium et matière synthétique. Le montage est réalisé de la manière suivante:engagement des doigts *16* dans le logement *13* (figure 7), puis fixation de la poignée sur le tube *2* à l'aide du collier *6* (figure 1) avant mise en place du câble *10*, dont la tête pénètre dans un logement *18* du levier *3* (figure 5). Lorsque la poignée est posée, la tension du câble assure le maintien des doigts *16* en appui sur le fond du logement *13*.

Comme il ressort de ce qui précède, l'invention apporte une grande amélioration à la technique existante en fournissant une poignée de conception simple, puisque comportant des pièces d'articulation en faisant partie intégrante, et dont l'assemblage est réalisé de façon immédiate sans avoir à recourir à aucun outil ou accessoire. L'ensemble poignée-support comporte deux pièces seulement, au lieu de quatre ou cinq, comme c'est le cas habituellement.

Dans le but de réduire encore le nombre de pièces composant cette poignée, l'extrémité *6a* du collier *6* est repliée sur elle-même et taraudée pour former écrou, comme montré figure 4. Son autre extrémité *6b* comporte un trou lisse de plus grand diamètre pour le passage d'une vis *8*, traversant un trou *9* de la paroi *4a* du support. En se vissant dans le taraudage, la vis communique au collier une tension augmentant le serrage qu'il exerce sur le tube *2*. Grâce à sa structure, ce collier simplifie également son montage sur le support, puisqu'il évite d'avoir à mettre en place un écrou dans un endroit mal commode d'accès.

Enfin, il faut noter que, grâce à la position de l'axe très près du tube du guidon, tout le levier peut être rapproché du guidon, ce que facilite la préhension lorsque cette poignée est montée sur des cycles pour enfants.

## Revendications

1. Poignée pour commande à câble de cycle ou motocycle du type comportant un levier (3) dont l'extrémité, en forme de patte, est munie d'un axe d'articulation (16) faisant saillie de chaque côté de la patte et un support (4) muni de moyens de guidage du câble, coopérant avec des moyens de fixation sur une partie du cycle et présentant une fente (14) formant chape pour le passage de la patte du levier et des logements de réception des extrémités de l'axe d'articulation ménagés dans les parois de la chape, caractérisée en ce que l'axe d'aritculation est constitué par deux doigts cylindriques (16) coaxiaux faisant partie intégrante de la patte (15) du levier et en ce que les logements de réception (13) des extrémités de l'axe d'articulation débouchent dans la face (5) du support destinée à venir en appui sur une partie (2) du cycle qui constitue le moyen de retenue de l'axe d'articulation.

2. Poignée selon la revendication 1, caractérisée en ce qu'au moins deux bords opposés délimitant l'ouverture du logement (13) sont déformés vers l'intérieur (17) après montage du levier (3).

3. Poignée selon l'une quelconque des revendications 1 et 2, caractérisée en ce que le support (4), réalisé en une seule pièce, comporte un évidement (11) débouchant dans sa face d'appui (5) et dont le fond (42) est traversé par un trou (9) pour une vis de serrage (8) se vissant dans un taraudage réalisé dans l'extrémité repliée (62) d'un collier de serrage (6), collier dont les deux extrémités se logent dans l'évidement précité.

## Patentansprüche

1. Handhebel für Drahtzugbetätigung bei einem Fahrrad oder Motorrad, welcher einen Hebel (3), dessen als Platte geformtes Ende mit einer beidseits der Platte vorspringenden Schwenkachse (16) versehen ist, und einen Träger (4) aufweist, der mit Führungsmitteln für das Kabel versehen ist, mit Mitteln zur Befestigung an einem Teil des Fahrrades zusammenwirkt und einen Schlitz (14) aufweist, welcher das Gehäuse für den Durchgang der Platte des Hebels und Lager für die Aufnahme der Enden der Schwenkachse bildet, welche Lager in den Seitenwänden des Gehäuses vorgesehen sind, dadurch gekennzeichnet, daß die Schwenkachse durch zwei koaxiale zylindrische Zapfen (16) gebildet ist, welche mit der Platte (15) des Hebels einstückig ausgebildet sind, und daß die Lager (13) für die Aufnahme der Enden der Schwenkachse in Richtung zu jener Fläche (5) des Trägers hin offen sind, welche dazu bestimmt ist, in Anlage an einen Teil (2) des Fahrrades zu kommen, welcher das Mittel zur Zurückhalten der Schwenkachse bildet.

2. Handgriff nach Anspruch 1, dadurch gekennzeichnet, deß wenigstens zwei gegenüberliegende, die Öffnung des Lagers (13) begrenzende Ränder nach der Montage des Hebels (3) nach innen verformt sind.

**3. Handgriff nach einem der Ansprüche 1 und 2**, dadurch gekennzeichnet, daß der aus einem Stück gefertigte Träger (4) einen Hohlraum (11) aufweist, welcher zur Anlagefläche (5) hin offen ist und dessen Boden (4a) von einem Loch (9) für eine Verriegelungsschraube (8) durchsetzt ist, welche in eine Ausbohrung eingeschraubt ist, die in dem umgeschlagenen Ende (6a) eines Verriegelungsbandes (6) vorgesehen ist, dessen beide Enden in dem vorgenannten Hohlraum untergebracht sind.

## Claims

1. A handle for cable control of a cycle or motorcycle of the type including a lever (3) of which the end, in the form of a lug, is provided with a pivot shaft (16) projecting from each side of the lug and a support (4) provided with guide means for the cable, co-operating with means for fixing on a part of the cycle and presenting a slot (14) forming a fork for the passage of the lug of the lever and recesses for reception of the ends of the pivot shaft formed in the walls of the fork, characterised in that the pivot shaft is constituted by two coaxial cylindrical fingers (16) forming an integral part of the lug (15) of the lever and in that the recesses (13) for reception of the ends of the pivot shaft open into the surface (5) of the support intended to bear upon a part (2) of the cycle which constitutes the retention means for the pivot shaft.

2. A handle according to Claim 1 characterised in that at least two opposed sides delimiting the opening of the recess (13) are deformed inwardly (17) after assembly of the lever (3).

3. A handle according to any one of Claims 1 and 2, characterised in that the support (4), formed as a single piece, includes a cavity (11) opening into its engaging face (5) and through the bottom (4a) of which is formed a hole (9) for a clamping screw (8) which screws into a thread formed in the bent back end (6a) of a clamping strap (6), of which the two ends are housed in the aforesaid cavity.

0018929

FIG.1

FIG.2

FIG.4

FIG.3

FÍG.7

FÍG.5

FÍG.6

2